(19) 

**Europäisches Patentamt**
**European Patent Office**
**Office européen des brevets**

(11) **EP 2 957 060 B1**

(12) **EUROPEAN PATENT SPECIFICATION**

(45) Date of publication and mention
of the grant of the patent:
**27.06.2018 Bulletin 2018/26**

(51) Int Cl.:
*H04W 56/00* (2009.01)     *H04L 5/00* (2006.01)
*H04W 72/04* (2009.01)     *H04W 88/02* (2009.01)
*H04W 88/08* (2009.01)

(21) Application number: **13874928.8**

(86) International application number:
**PCT/SE2013/050125**

(22) Date of filing: **13.02.2013**

(87) International publication number:
**WO 2014/126512 (21.08.2014 Gazette 2014/34)**

(54) **A RADIO BASE STATION AND METHOD THEREIN FOR TRANSMITTING TIME ALIGNMENT CONFIGURATION TO A USER EQUIPMENT**

FUNKBASISSTATION UND VERFAHREN DARIN ZUR ÜBERTRAGUNG EINER ZEITANPASSUNGSKONFIGURATION AUF EINE BENUTZERVORRICHTUNG

STATION DE BASE RADIO ET PROCÉDÉ RÉALISÉ SUR CELLE-CI POUR ENVOYER UNE CONFIGURATION D'ALIGNEMENT TEMPOREL À UN ÉQUIPEMENT D'UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.12.2015 Bulletin 2015/52**

(73) Proprietor: **Telefonaktiebolaget LM Ericsson (publ)**
**164 83 Stockholm (SE)**

(72) Inventors:
• **GUNNARSSON, Fredrik**
  **SE-587 50 Linköping (SE)**

• **FRENGER, Pål**
  **SE-583 34 Linköping (SE)**
• **TEYEB, Oumer**
  **SE-177 44 Solna (SE)**
• **RUNE, Johan**
  **SE-181 29 Lidingö (SE)**

(74) Representative: **Ericsson**
**Patent Development**
**Torshamnsgatan 21-23**
**164 80 Stockholm (SE)**

(56) References cited:
**WO-A1-2011/100673**     **WO-A1-2011/100673**
**WO-A1-2012/158959**     **US-A1- 2011 080 896**

**Description**

Technical field

Embodiments of the technology presented herein generally relate to the field of telecommunications and more particularly to a radio base station and method therein for providing a User Equipment, UE, with timing information.

Background

In a cellular communication network, a Radio Base Station, RBS, may transmit data and/or signals to a User Equipment, UE. Such transmissions are often referred to as downlink transmission. The UE may transmit data and/or signals to the RBS, which is often referred to as uplink transmission.

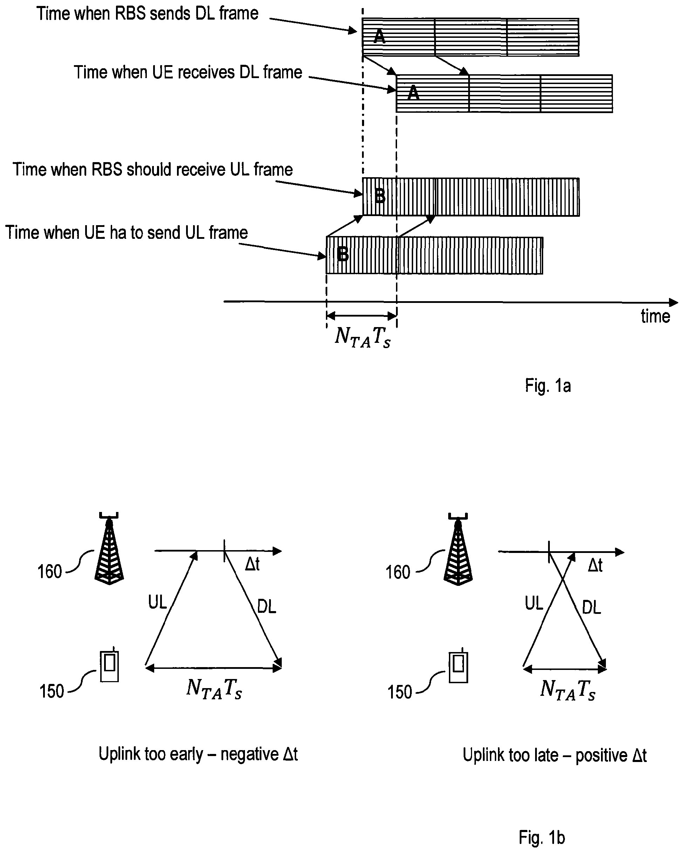

In order for the RBS and UE to communicate by means of downlink and uplink transmissions, the RBS and the UE should be synchronised so that the RBS and the UE may send and receive in a synchronised manner. This will be more described in figure 1a.

Figure 1a is an illustration of an uplink timing advance in a cellular communication network. Figure 1 illustrates that there is a time delay from the point in time when either the RBS transmits in downlink or the UE transmits in uplink until the UE or the RBS receives the respective transmission. Figure 1a illustrates both that there is a delay from the point in time a transmission is sent until the point in time when the transmission is received, and that the point in time when the UE should transmit, or send, an uplink frame is relative a point in time when the UE receives a downlink frame. The time difference between the uplink transmission time and the downlink frame reception time is denoted timing advance. The timing advance can be described via different frameworks. It shall be pointed out that this specific example is from Long Term Evolution, LTE, wherein timing advance is defined as an integer $N_{TA}$ times an LTE basic time unit $T_s$ that equals $1/(2048*15000)$ second, which in total gives a timing advance of $N_{TA}T_s$. However, the principle is applicable in other cellular communication networks. In this specific example, the transmission of an uplink radio frame shall start $N_{TA}T_s$ seconds before the start of the corresponding downlink radio frame at the UE.

The uplink timing is maintained by sending timing advance commands to the UE, which are based on estimated uplink timing of the UE. The UE will adjust the timing advance, by updating $N_{TA}$ based on the received timing advance commands.
Figure 1b illustrates two situations where the estimated uplink timing is inadequate. In the first exemplifying situation, the $\Delta t$ is negative, indicating that the uplink is received too early. This implies that $N_{TA}T_s$ is too long a time, and the network will send an uplink timing advance command to the UE to decrease $N_{TA}$. In the second exemplifying situation, the $\Delta t$ is positive, indicating that the uplink is received too late. This implies that $N_{TA}T_s$ is a too short a time, and the network will send an uplink timing advance command to the UE to increase $N_{TA}$.

Figure 1b, left hand side, illustrates a situation where the UE 150 transmits too early in relation to the downlink transmission from the RBS 160. In this situation, the UE will have to adjust its uplink transmission so that it is delayed with $\Delta t$ so that it is time aligned with the RBS's downlink transmission. Figure 1b, right hand side, illustrates a situation where the UE 150 transmits too late in relation to the downlink transmission from the RBS 160. In this situation, the UE will have to adjust its uplink transmission so that it is moved forward in time with $\Delta t$ so that it is time aligned with the RBS's downlink transmission.

Based on timing misalignment measurements, i.e. $\Delta t$, the RBS 160 may send quantized corrections to the UE 150. Initial timing $\Delta t(1)$ may be estimated based on a random access preamble from the UE 150 and a quantised timing advance

$$Q\big(\Delta t(1)\big) = \text{round}\left(\frac{\Delta t(1)}{16 T_s}\right)$$

with respect to the downlink reception and is signalled to the UE. From this quantised information, the UE may determine the timing advance to be considered for subsequent uplink transmissions as $N_{TA}(1) = 16 Q(\Delta t(1))$. Subsequent adjustments may then be based on timing estimates in the RBS 160 and corrections to the current timing may be sent as Timing Advance, TA, commands to the UE 150.

Quantisation at time k:

$$Q\big(\Delta t(k)\big) = \text{round}\left(\frac{\Delta t(k)}{16 T_s}\right)$$

and corresponding timing update in the UE is then $N_{TA}(k + 1) = N_{TA}(k) + 16 Q(\Delta t(k))$.

In brief, the timing alignment is restarted every time a UE changes its serving RBS, or serving cell, and while connected to the RBS, or cell, timing alignment is maintained by regular relative corrections of a timing advance with respect to the serving RBS, or serving cell, downlink reception by the UE.

When a UE moves around having both an uplink and a downlink radio link established to a first RBS, the UE may enter or be located in an area in which two cells, or coverage areas of the first RBS and a neighbouring RBSs, meet. In certain scenarios, the UE may establish an uplink radio link to the neighbouring RBS and still keep the downlink radio link to the first RBS. Since the first RBS and the neighbouring RBS are not the same, the timing advance may be different. Since the timing advance is relative the downlink transmission, a problem arises when the uplink and downlink radio links are established to different RBSs.

WO 2011/100673 A1 discloses in its Figure 12 and supporting text an arrangement of a first RBS and a neighbouring RBS which are in communication with a UE. All information including timing advance is exchanged between the first RBS and the neighbouring RBS. When a pair of associated UL and DL carriers used by the UE are connected to the first RBS and the neighbouring RBS respectively, the UE administers timing advances specific to each of the first RBS and the neighbouring RBS, maintaining separate timing advances for each RBS.

US 2011/080896 A1 discloses an RBS in communication with a UE in which the UE maintains separate UL and DL timing advances for its communication with the RBS.

Summary

The invention is defined by the appended claims. The references to embodiments in the description falling outside the scope of the appended claims are to be understood as mere examples which are useful for understanding the invention. The object is to obviate at least some of the problems outlined above. In particular, it is an object to provide an RBS, operable in a cellular communication network, and a method performed therein for transmitting time alignment configuration to a UE. It is further an object to provide an RBS, operable in a cellular communication network, and a method performed therein for providing a timing related parameter relevant for a UE to a neighbouring RBS. These objects and others may be obtained by providing a respective RBS and a respective method performed by a respective RBS according to the independent claims attached below.

According to an aspect a method is performed according to the independent method claim.

According to an aspect, an RBS is provided according to the independent apparatus claim.

The respective method performed by the respective RBS may have several advantages. They provide an alternative mechanism for acquisition and configuration of the proper uplink transmission timing to be used by the UE. They enable a UE to be "served" by two different RBSs and still use a proper uplink transmission timing. The methods/RBSs may be also beneficial during uplink configurations, especially when shifting uplink reception points between different nodes, e.g. a handover of the uplink radio link from RBS A to RBS B. In such an uplink handover situation, the methods/RBSs in particular provide the advantage that the UE may keep the previous source of the downlink transmissions, i.e. RBS A, and still use the downlink transmissions as the reference for the uplink transmission timing, despite the fact that the sender of the downlink transmissions (RBS A) and the receiver of the uplink transmissions (RBS B) are different nodes. Another advantage is that it is possible to complete handover from RBS A to RBS B (or from a first RBS to a second RBS) without a random access procedure towards the second RBS, i.e. RBS B, which does not serve the UE in downlink. The handover may further be performed without data transmission interruption. Still further, it is also possible to shift uplink timing relevance from the first RBS to the second RBS and back again without using random access to the RBS to which the uplink is handed over, making the procedure efficient to use where the first RBS is coordinating both the first and the second RBS resources. Still further, it is also possible to support multiple timing advance values at the UE that is associated with different nodes/points/RBSs, which makes it easier to realise handover diversity such as sending measurement reports to multiple nodes.

Brief description of drawings

Embodiments will now be described in more detail in relation to the accompanying drawings, in which:

Figure 1a is an illustration of an uplink timing advance in a cellular communication network.

Figure 1b is an illustration of different uplink timing alignments.

Figure 2a is a flowchart of a method performed by an RBS for transmitting time alignment configuration to a UE according to an exemplifying embodiment.

Figure 2b is a flowchart of a method performed by an RBS for transmitting time alignment configuration to a UE according to an exemplifying embodiment.

Figure 2c is a signalling diagram of an example of an RBS configuring uplink signalling.

Figure 2d is a schematic illustration of an LTE architecture showing logical interfaces between different nodes.

Figure 2e is a schematic illustration of a Global System for Mobile, GSM, architecture showing logical interfaces between different nodes.

Figure 2f is a schematic illustration of a Universal Mobile Telecommunications System, UMTS, architecture showing logical interfaces between different nodes.

Figure 2g is a schematic illustration of an exemplifying management system architecture.

Figure 3a is a flowchart of a method performed by an RBS for providing a timing related parameter to a neighbouring RBS according to an exemplifying embodiment.

Figure 3b is a flowchart of a method performed by an RBS for providing a timing related parameter to a neighbouring RBS according to an exemplifying embodiment.

Figure 4 is a block diagram of an RBS operable in a cellular communication network and adapted for transmitting time alignment configuration to a UE according to an exemplifying embodiment.

Figure 5 is a block diagram of an RBS operable in a cellular communication network and adapted for providing a timing related parameter to a neighbouring RBS according to an exemplifying embodiment.

Figure 6 is a block diagram of an arrangement in an RBS operable in a cellular communication network and adapted for transmitting time alignment configuration to a UE according to an exemplifying embodiment.

Figure 7 is a block diagram of an arrangement in an RBS operable in a cellular communication network and adapted for providing a timing related parameter to a neighbouring RBS according to an exemplifying embodiment.

Figure 8 is a schematic illustration of a heterogeneous network architecture.

Figure 9 is an illustration of transfers of downlink reference and uplink reception points/RBSs, illustrated with a first RBS as a macro RBS and a second RBS as a low power RBS.

Figure 10 is a signalling diagram of a Random Access procedure in case of initial access.

Detailed description

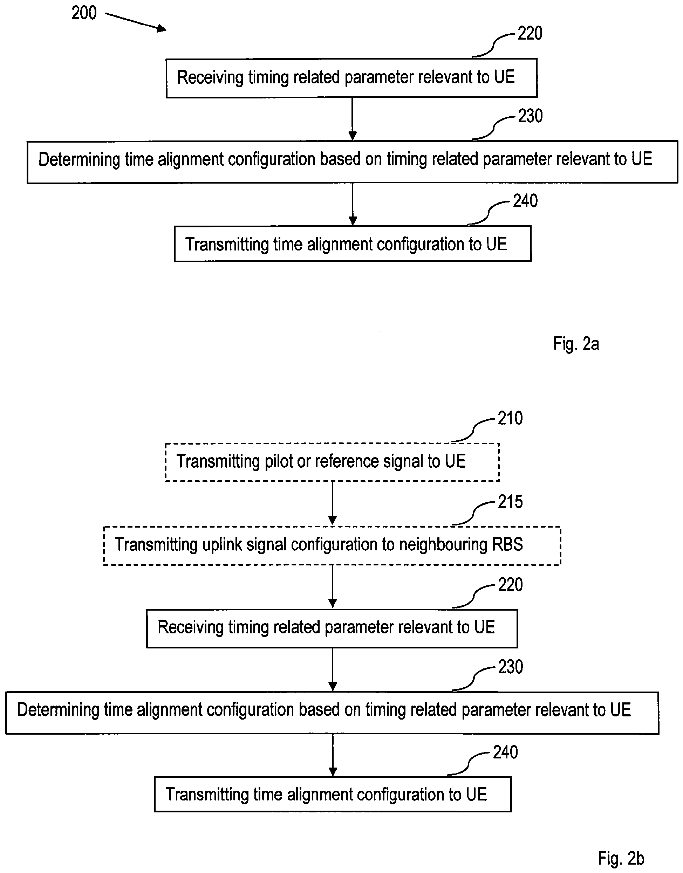

Briefly described, an RBS operable in a cellular communication network and a method therein for transmitting time alignment configuration to a UE are provided. Further, an RBS operable in a cellular communication network and a method therein for providing a timing related parameter relevant for the UE to a neighbouring RBS are provided. The time alignment configuration is determined by the RBS based on information received a neighbouring RBS, which receives uplink transmission(s) from the UE.
Such an exemplifying method for transmitting time alignment configuration to a UE performed by an RBS will now be described with reference to figure 2a. Figure 2a illustrates the method performed by the RBS comprising receiving 220, from a neighbouring RBS, a timing related parameter relevant for the UE as estimated by the neighbouring RBS, and determining 230 a time alignment configuration based on the received timing related parameter(s). The method further comprises transmitting 240, to the UE, the determined time alignment configuration.
The RBS is operable in a cellular communication network and it is responsible for transmitting time alignment configuration to the UE. The RBS has at least one neighbouring RBS. In order to separate the two RBS, the RBS responsible for transmitting time alignment configuration to the UE may hereinafter be referred to as RBS A and the neighbouring RBS may be referred to as RBS B.
The RBS A receives at least one timing related parameter relevant for the UE from the neighbouring RBS, i.e. RBS B. The timing related parameter has been estimated by the neighbouring RBS. The timing related parameter relevant for the UE is a measure of timing situation information. How the RBS B has estimated the timing related parameter(s) will be described in more detail below. An example of a timing related parameter is uplink received timing relative a desired uplink timing, this will be explained below.
When the RBS A receives the at least one timing related parameter, the RBS A may determine a time alignment configuration based on the received timing related parameter(s). The RBS A is informed by means of the at least one timing related parameter when the UE is transmitting an uplink frame or uplink transmission in relation to a reference time of the neighbouring RBS, i.e. RBS B. Merely as an example, the at least one timing related parameter may inform the RBS A when the UE should transmit any uplink frame in order for the RBS B to receive it properly. Then, the RBS A may determine the time alignment configuration based on when in time in relation to the downlink transmission of the RBS A. In other words, the RBS A determines when in time the UE should transmit any uplink frame, relative a downlink transmission from the RBS A, in order for the RBS B to receive the transmitted uplink frame properly. The RBS A then transmits the determined time alignment configuration to the UE.
The RBS A has an internal reference time, which controls when the RBS A transmits in downlink and should receive any uplink transmission. Therefore, the time alignment configuration can be said to be relative the reference time of RBS A, which controls the downlink transmissions from the RBS A.
The method performed by the RBS may have several advantages. The method provides an alternative mechanism for acquisition and configuration of the proper uplink transmission timing to be used by the UE. It enables a UE to be "served" by two different RBSs and still use a proper uplink transmission timing. The method may be also beneficial during uplink configurations, especially when shifting uplink reception points between different nodes, e.g. a handover of the uplink radio link from RBS A to RBS B. In such an uplink handover situation, the method in particular provides the advantage that the UE may keep the previous source of the downlink transmissions, i.e. RBS A, and still use the downlink transmissions as the reference for the uplink transmission timing, despite the fact that the sender of the downlink transmissions (RBS A) and the receiver of the uplink transmissions (RBS B) are different nodes. Another advantage is that it is possible to complete handover from RBS A to RBS B (or from a first RBS to a second RBS) without a random access procedure towards the second RBS, i.e. RBS B, which does not serve the UE in downlink. The handover may further be performed without data transmission interruption. Still further, it is also possible to shift uplink timing relevance from the first RBS to the second RBS and back again without using random access to the RBS to which the uplink is handed over, making the procedure efficient to use where the first RBS is coordinating both the first and the second RBS resources. Still further, it is also possible to support multiple timing advance values at the UE that is associated with different nodes/points/RBSs, which makes it easier to realise handover diversity such as sending measurement reports to multiple nodes.

According to an embodiment, the determined time alignment configuration comprises an indication to the UE that the time alignment configuration is based on the received timing related parameter(s) with respect to a transmitted pilot or reference signal from the neighbouring RBS.

As described above, any downlink transmission is controlled by an internal time reference of the RBS. Any downlink transmission, e.g. downlink transmission of a data frame or the transmission by a pilot or reference signal. Further, the neighbouring RBS, RBS B, also transmits a pilot or reference signal which the UE can "hear", or receive. The UE must know which reference to align after, i.e. in relation to which reference shall the UE apply the received time alignment configuration. Merely as an example, the UE receives a downlink transmission from the RBS A having a first time reference associated with RBS A. The UE also receives a pilot or reference signal from RBS B having a second time reference associated with RBS B. The time alignment configuration comprises an indication to the UE which time reference to use when employing or applying the received time alignment configuration. In this particular case, the time alignment configuration comprises an indication to the UE that the UE shall employ or apply the time alignment configuration with respect to the pilot or reference signal received from the neighbouring RBS, RBS B. In one example, the RBS A may either have or obtain the information regarding the reference time of RBS B, e.g. RBS A and RBS B may communicate directly or indirectly via e.g. a node in a Radio Access Network, RAN, or via a node in a core network. In another example, when the RBS A receives the timing related parameter relevant to the UE from the neighbouring RBS B, the reference time of RBS B is enclosed so that the RBS A may determine the time alignment configuration based on the received timing related parameter with respect to the reference timing of RBS B.

According to still an embodiment, the method further comprises transmitting 210 a pilot signal, reference signal or downlink transmission to the UE, wherein the time alignment configuration is based on the received timing related parameter(s) with respect to the transmitted pilot signal, reference signal or downlink transmission, wherein the determined time alignment configuration comprises an indication to the UE that the time alignment configuration is based on the received timing related parameter(s) with respect to the transmitted pilot, reference signal from the RBS or downlink transmission.

This embodiment is illustrated in figure 2b. The transmitted pilot signal, reference signal or downlink transmission to the UE may be used as a time reference for the UE when the UE employs or applies the time alignment configuration, as described above. The UE will receive the transmitted pilot signal, reference signal or downlink transmission and transmit in the uplink to the neighbouring RBS, RBS B. The RBS B estimates at least one timing related parameter relevant to the UE and transmits the estimated at least one timing related parameter to the RBS, RBS A. The RBS A receives the estimated at least one timing related parameter relevant to the UE and uses the parameter to determine a time alignment configuration based on the received parameter. The time alignment configuration is further based on the time reference of the RBS, RBS A. The time alignment configuration further comprises an indication to the UE that the UE shall apply or employ the time alignment configuration with respect to the transmitted pilot, reference signal from the RBS or the downlink transmission from the RBS, RBS A.

According to still an embodiment, the method further comprises transmitting 215, to the neighbouring RBS, signalling indicating which of an uplink Demodulation Reference Symbol, DM-RS, a Sounding Reference Symbol, SRS, and a Random Access, RA, preamble to use for estimating the timing related parameter(s) relevant for the UE.

The neighbouring RBS, RBS B, estimates the uplink reception time of a frame transmitted from the UE. The frame is a signal waveform, which may be an uplink DM-RS, an SRS or an RA preamble. The RBS A also transmits an uplink signal configuration to the UE in order to inform the UE about which signal waveform to use.

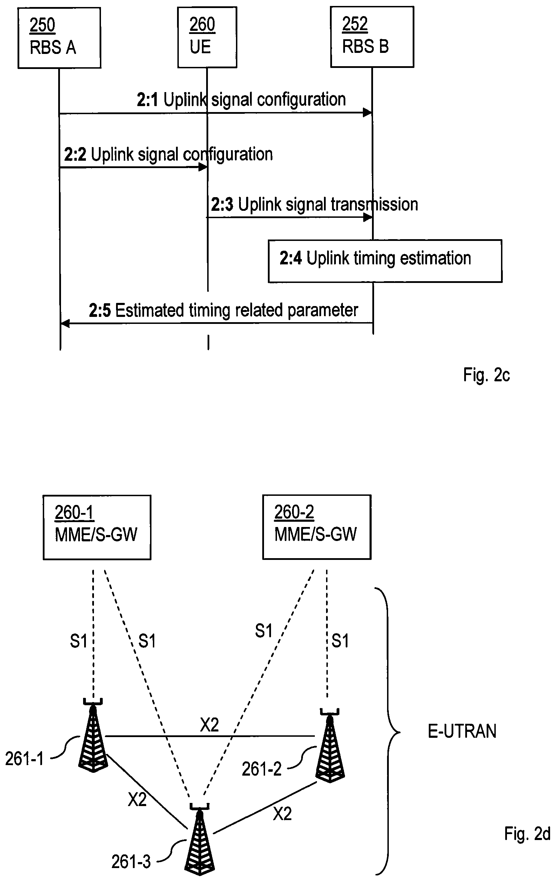

Figure 2c is a signalling diagram of an example of an RBS configuring uplink signalling. The RBS in this example is the RBS A. RBS A 250, which is the RBS responsible for sending time alignment configuration to the UE determines an uplink signal configuration. The uplink signal configuration comprises information on which signal waveform to use, DM-RS, an SRS or an RA preamble, and sends 2:1 the uplink signal configuration to the neighbouring RBS, RBS B 252. The RBS A 250 also sends 2:2 the uplink signal configuration to the UE 260. Now the UE 260 and the neighbouring RBS B 252 have the same information about which signal waveform to be used for uplink transmission from the UE 521 to the neighbouring RBS B 252. UE 521 sends 2:3 an uplink signal transmission to the neighbouring RBS B 252. The neighbouring RBS B 252 performs a 2:4 uplink timing estimation comprising estimating at least one timing related parameter relevant for the UE based on the received uplink signal transmission. The neighbouring RBS B 252 then sends 2:5 the estimated timing related parameter relevant for the UE to the RBS A 250. This last action results in the RBS A 250 receiving the at least one timing related parameter relevant for the UE as estimated by the neighbouring RBS B 252 as is illustrated in figure 2a in action 220.

Once the UE receives the uplink signal configuration, the UE may then employ the signal waveform for a subsequent uplink transmission. Since the neighbouring RBS, RBS B, receives the signalling from RBS A indicating which of an uplink DM-RS, an SRS, and an RA preamble to use for estimating the timing related parameter(s) relevant for the UE, the neighbouring RBS, RBS B, is enabled to use the correct signal waveform, i.e. the signal waveform used by the UE for the uplink transmission, for estimating the timing related parameter(s) relevant for the UE.

The neighbouring RBS B is thus enabled to estimate the uplink timing situation of the UE, while the UE is served in the downlink by the RBS A. This means that the uplink timing situation is estimated relative the uplink transmission time in the UE, wherein the uplink transmission time in the UE is related to the reception time of a downlink transmission, or a pilot signal or a reference signal from the RBS A. One example of a reception time of a downlink transmission is the reception of the start of a downlink radio frame from the RBS A.

According to an embodiment, the timing related parameter(s) relevant for the UE is received from the neighbouring RBS by means of an X2 interface.

In case the RBS, RBS A, and the neighbouring RBS, RBS B, are employed in an LTE based RAN, or communication network, RBS A and RBS B may communicate directly by means of an X2-interface. In this case the timing related parameter(s) relevant for the UE may be transferred from RBS B to RBS A e.g. in a Handover Request Acknowledge message of the X2 Application Protocol (X2AP) or in a new X2AP message. Alternatively, they may communicate indirectly e.g. via a Mobility management Entity, MME, and by means of an S1-interface. In this case the timing related parameter(s) relevant for the UE may be transferred from RBS B to RBS A in a "container" that is opaque for the MME, i.e. which the MME does not try to interpret, but merely forwards between RBS B and RBS A. RBS B would include the container in a suitable S1 Application Protocol (S1AP) message to the MME, e.g. a Handover Request Acknowledge message. The MME in turn would include the container in a suitable S1AP message when forwarding it to RBS A, for instance a Handover Command message. It is also possible that two MMEs are involved in the forwarding of the timing related parameter(s) relevant for the UE, in case RBS A and RBS B are connected to different MMEs (or different MME pools). Then the timing related parameter(s) relevant for the UE would be transferred in a suitable control plane message of the General Packet Radio Service Tunnelling Protocol version 2 (i.e. a GTPv2-C message) across an S10 interface between the two MMEs.

In an example, the RBS A and the neighbouring RBS B are employed in a GSM based communication system, wherein the RBS A and the neighbouring RBS B may not communicate directly, but indirectly via e.g. a Base Station Controller, BSC, by means of an Abis-interface or a Mobile Switching Centre, MSC. In still an example, the RBS A and the neighbouring RBS B are employed in a UMTS based communication system, wherein the RBS A and the neighbouring RBS B may not communicate directly, but indirectly via e.g. a Radio Network Controller, RNC by means of an Iub-interface. In such radio access technology architectures, the names and definitions of information and control elements can be different, but the general meaning is the same, that RBS B is evaluating the uplink timing related parameter, signals the information to RBS A, which communicates with the UE concerning uplink timing commands.

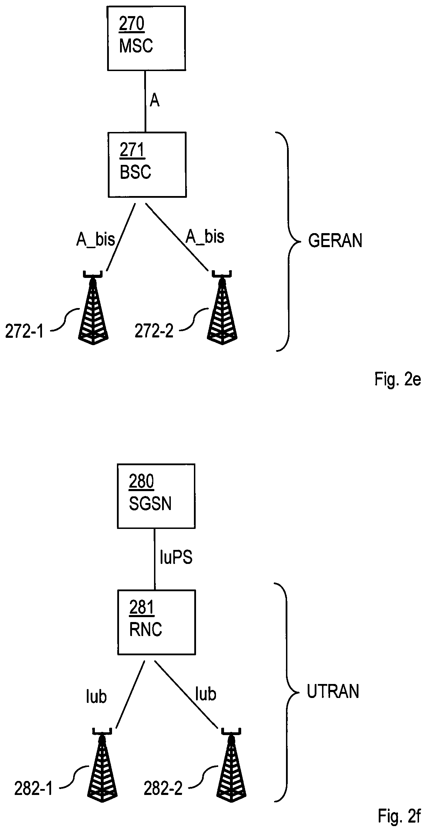

Examples of different communication networks and Radio Access Techniques, RATs, are schematically illustrated in figures 2d-f. An LTE based RAT is illustrated in figure 2d, a GSM based RAT is illustrated in figure 2e and a UMTS based RAT is illustrated in figure 2f. In case the cellular communication network employs GSM, the timing related parameter(s) relevant for the UE is received from a BSC 271 comprised in a GSM EDGE Radio Access Network, GERAN, of the cellular communication network. In case the cellular communication network employs UMTS, the a timing related parameter relevant for the UE is received from an RNC 281 comprised in a Universal Terrestrial Radio Access Network, UTRAN of the cellular communication network.

LTE is based on a rather flat architecture compared to GSM and UMTS systems. Each cell is served by an eNodeB or eNB ("RBS"), and handovers between cells can be handled either via the MME and the S1 interface, or directly between the eNBs via the X2 interface. In GSM and UMTS, the RBSs, also called Base Transceiver Stations, BTSs, or simply Base Stations, BSs, and NodeB or NB, respectively, are more hierarchical as the RBSs are not enabled to communicate directly but only via the BSC and RNC respectively.

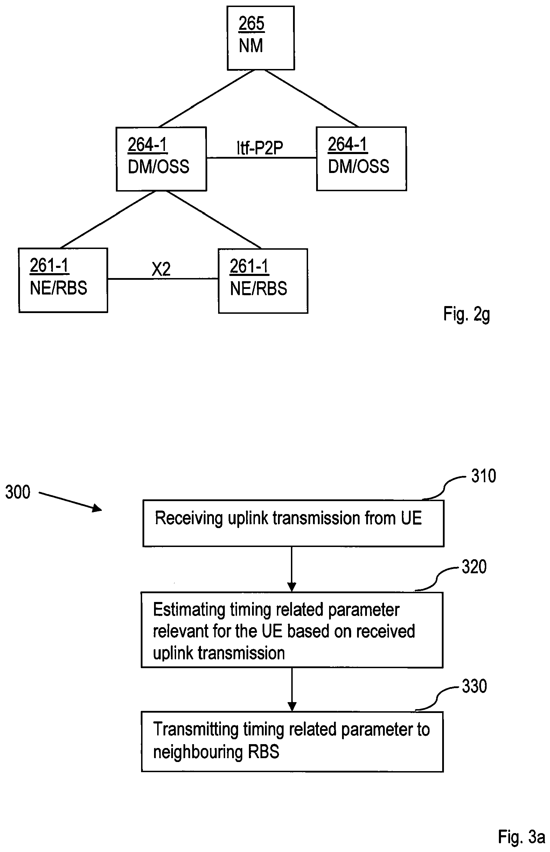

Figure 2g is a schematic illustration of a management system architecture for LTE based communication networks or systems. The Node Elements, NE, also referred to as RBSs or eNBs, are managed by a Domain Manager, DM, also referred to as the operation and support system, OSS. A DM may further be managed by a Network Manager, NM. Two NEs are interfaced by X2, whereas the interface between two DMs is referred to as Itf-P2P. The management system may configure the network elements, as well as receive observations associated to features in the network elements. For example, DM observes and configures NEs, while NM observes and configures DM, as well as NE via DM.

As described above, the timing situation information transfer, i.e. the at least one timing related parameter relevant for the UE as estimated by the neighbouring RBS B, from the neighbouring RBS B to the first RBS, RBS A, may be realised via an X2 interface (or an evolved version thereof) or via a node in the core network (i.e. the concerned MME(s)) across the S1 interfaces in case of LTE. The neighbouring RBS B may identify the first RBS A from the DL first cell transmissions (e.g. the system information transmissions) either directly or as reported by served UEs. Alternatively, the neighbouring RBS B may have been configured with appropriate one or more RBSs via an Operation and Maintenance, OaM, system.

According to an embodiment, the timing related parameter(s) relevant for the UE is received, via an S1 interface, from a core network to which the RBS and the neighbouring RBS are associated.

According to still an embodiment, transmitting 240, to the UE, the determined time alignment configuration is performed by means of a Radio Resource Control, RRC, protocol.

According to yet an embodiment, transmitting 240, to the UE, the determined time alignment configuration is performed by means of a Medium Access Control, MAC, protocol.

The time alignment and timing advance signalling, i.e. the time alignment configuration, to the UE can be via a RRC, a MAC protocol, or any other protocol between an RBS (or another node in the RAN) and the UE.

In case of RRC, the time alignment configuration comprising time adjustment information may be included in an RRCConnectionReconfiguration message from the RBS A which is responsible for downlink transmission to the UE, and can be seen as a means for the RBS A to reconfigure the uplink timing advance, either relative to the current timing advance, a transmitted reference/pilot signal or via an absolute value.

The time alignment configuration information may alternatively be included in a mobilityControlInfo, for example included in an RRCConnectionReconfiguration message, and may be seen as a means to configure the uplink for reception at a different node. The uplink timing advance can preferably be relative the RBS A in the downlink such that the timing advance is configured relative to a reception time of a DL transmission from the RBS A. Typically, this RBS may also be referred to as the first RBS, but it can also be the second RBS, i.e. the neighbouring RBS B, as a consequence of the reconfiguration.

The reconfiguration message may also contain access information relevant for the neighbouring RBS B, possibly as received from the neighbouring RBS B. Such information may comprise an assigned uplink resource for communication with the neighbouring RBS B, a cell specific UE identifier to use for the uplink communication with the neighbouring RBS B (e.g. a C-RNTI), and information about coding, modulation, waveform, encryption etc.

The first RBS, RBS A, may also configure the timing advance in the UE via commands sent as MAC control elements. These may be either relative the current timing advance, a transmitted reference/pilot signal or a new timing advance in absolute terms. The UE may then adjust its timing advance e.g. with respect to the downlink timing from the RBS A downlink. The Timing Advance, TA, commands may also be signalled via some other interface between the RBS A and the UE.

In one mode, the RBS A may restart the uplink timing outside the random access procedure. An example is the case when the uplink of a specific UE is detected at the neighbouring RBS B and is considered to be a more favourable uplink than the uplink to the RBS A. When this is disclosed, the RBS A restarts the uplink timing advance of the UE based on timing information (the at least one timing related parameter relevant for the UE) from the neighbouring RBS B in order to make the uplink timing advance relevant for the second neighbouring RBS B uplink.

According to an embodiment, the time alignment configuration comprises a new timing advance in absolute terms.

Instead of the time alignment configuration being relative a downlink transmission from the RBS A, a transmitted pilot or reference signal from RBS A or a transmitted pilot or reference signal from the neighbouring RBS B, the time alignment configuration comprises a new timing advance in absolute terms. This means that the UE will adjust the timing of a subsequent uplink transmission relevant a previous uplink transmission according to the timing advance in absolute terms. Merely as an example, the timing advance in absolute terms may inform the UE to adjust its uplink timing by e.g. delaying it 5 microseconds relative the uplink timing for a previous uplink transmission. Another example is that the timing advance in absolute terms may inform the UE to adjust its uplink timing by e.g. moving it forward 10 milliseconds relative the uplink timing for a previous uplink transmission.

Embodiments herein also relate to a method performed by an RBS, RBS B, operable in a cellular communication network, for providing a timing related parameter relevant for a UE to a neighbouring RBS, RBS A.

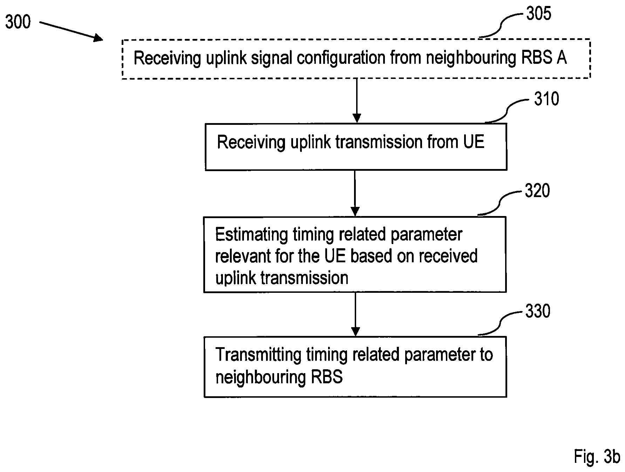

Exemplifying embodiments of such a method will now be described with reference to figure 3a. Figure 3a illustrates the method 300 comprising receiving 310 from the UE, an uplink transmission; and estimating 320 a timing related parameter relevant for the UE based on the received uplink transmission. The method further comprises transmitting 330, to a neighbouring RBS, RBS A, the estimated timing related parameter relevant for the UE for enabling the neighbouring RBS, RBS A, to determine a timing alignment configuration based on the estimated timing related parameter.

The RBS B is not responsible for transmitting downlink transmissions to the UE and hence, the RBS B does not send, or transmit, timing alignment configuration to the UE. The UE is instead served in downlink by the neighbouring RBS A. RBS B can be said to serve the UE in uplink, since the transmissions in uplink from the UE is received by the RBS B. RBS B receives an uplink transmission from the UE. The RBS B estimates the timing related parameter (or the at least one timing related parameter) relevant for the UE based on the received uplink transmission. In one example, the estimation comprises comparing the reception time of the uplink transmission, the uplink reception time, to a reference timing of RBS B. In case there is a difference, the RBS B determines this difference, which can be positive or negative as has been described above in conjunction with figure 1b. Merely as an example, the RBS B may estimate the timing related parameter to be -0.005 seconds, which looking at figure 1b corresponds to the UE having transmitted the uplink transmission 0.005 too soon and needs to delay a subsequent uplink transmission by 0.005 seconds. Hence, the RBS B. The RBS B then transmits the timing related parameter being 0.005 seconds to the neighbouring RBS A. By doing so, the RBS A is enabled to determine a timing alignment configuration based on the estimated timing related parameter, which the RBS A will thereafter send to the UE as has been described above in conjunction with figures 2a-2g.

When the RBS B estimates the uplink timing situation, i.e. estimates at least one timing related parameter relevant for the UE, the RBS B may compare the uplink reception time to a reference time or a desired uplink reception time as just described above. The uplink timing situation in this case comprises the uplink reception time or difference between the uplink reception time and the reference/desired uplink reception time. In addition, node timing information may also be considered as part of the timing situation. The node timing situation relates to an offset between a time reference of the RBS B and a time reference of a second neighbouring RBS not responsible for transmitting time alignment configuration to the UE. In an example, the offset is the difference in time between the start of a new frame at the RBS and the start of a new frame at the second neighbouring RBS.

The method performed by RBS B for providing a timing related parameter relevant for the UE to a neighbouring RBS, RBS A, has the same advantages as the method performed by the RBS A for transmitting time alignment configuration to a UE, since the two RBSs work together in order to provide the UE with the time alignment configuration. The method provides an alternative mechanism for acquisition and configuration of the proper uplink transmission timing to be used by the UE. It enables a UE to be "served" by two different RBSs and still use a proper uplink transmission timing. The method may be also beneficial during uplink configurations, especially when shifting uplink reception points between different nodes, e.g. a handover of the uplink radio link from RBS A to RBS B. In such an uplink handover situation, the method in particular provides the advantage that the UE may keep the previous source of the downlink transmissions, i.e. RBS A, and still use the downlink transmissions as the reference for the uplink transmission timing, despite the fact that the sender of the downlink transmissions (RBS A) and the receiver of the uplink transmissions (RBS B) are different nodes. Another advantage is that it is possible to complete handover from RBS A to RBS B (or from a first RBS to a second RBS) without a random access procedure towards the second RBS, i.e. RBS B, which does not serve the UE in downlink. The handover may further be performed without data transmission interruption. Still further, it is also possible to shift uplink timing relevance from the first RBS to the second RBS and back again without using random access to the RBS to which the uplink is handed over, making the procedure efficient to use where the first RBS is coordinating both the first and the second RBS resources. Still further, it is also possible to support multiple timing advance values at the UE that is associated with different nodes/points/RBSs, which makes it easier to realise handover diversity such as sending measurement reports to multiple nodes.

According to an embodiment, estimating 220 the timing related parameter further comprises estimating the timing related parameter relevant for the UE based on the received uplink transmission in relation to a transmitted pilot signal or reference signal from the RBS to the UE.

The transmitted pilot signal or reference signal from the RBS B to the UE may be depending on, or closely related to, the reference time. The RBS B may indicate, to the RBS A, when sending the at least one timing related parameter relevant for the UE to RBS B if the at least one timing related parameter is estimated in relation to the reference time of RBS B, or in relation to an uplink reception time,

According to yet an embodiment, the received uplink transmission from the UE comprises at least one of a DM-RS, an SRS, and an RA preamble.

According to an embodiment, the method further comprises receiving, from the neighbouring RBS A, signalling indicating which of the DM-RS, SRS and the RA preamble to use for estimating the timing related parameter(s) relevant for the UE.

This has been explained above in conjunction with figure 2c and will not be repeated again in order to avoid unnecessary repetition.

According to still an embodiment, estimating 220 the timing related parameter(s) relevant for the UE based on the received uplink transmission comprises comparing the uplink reception time of the received uplink transmission to a reference uplink reception time.

According to yet an embodiment, estimating 220 the timing related parameter(s) relevant for the UE is performed per UE or is performed for aggregated UEs which receive their time alignment configuration from the neighbouring RBS, RBS A.

There may be a plurality of UEs located relatively close to each other, which may result in the plurality of UEs having the same or very similar timing situation, i.e. they all have fairly the same distance to the RBS B so that the time difference from when the UEs transmit a radio frame until the RBS B receives the radio frame is more or less the same for the plurality of UEs. In such a case, it would be enough to estimate the (at least one) timing related parameter for one of the UEs, setting corresponding time related parameter for the remaining UEs to the same value and then transmit the respective time related parameter for the UEs to the neighbouring RBS A.

UEs in a cell overlap region of the first and second cells may trigger measurement reports including the first cell if being served by the second cell, and including the second cell if being served by the first cell. Thereby, a UE can be classified as a cell overlap region UE. The UE-specific timing situation estimation may then be performed aggregated for all, or a subset of all, UEs served by the RBS B and also are classified as cell overlap UEs.

In heterogeneous networks comprising both macro RBSs having relatively strong output power and corresponding large coverage areas or cells and low power RBSs having relatively weak output power and corresponding small coverage areas or cells, wherein the RBS A is a macro RBS and the RBS B is a low power RBS, all UEs being served in uplink by the RBS B having a small cell may have the same uplink timing situation.

According to an embodiment, the reception of the uplink transmission from the UE is preceded by a handover of uplink transmission from the UE, from the neighbouring RBS, RBS A, to the RBS, RBS B, wherein a downlink transmission to the UE is continued to be handled by the neighbouring RBS, RBS A.

In an example, during handover, information may be exchanged, either directly or indirectly, between the two RBSs, RBS A and RBS B. The exchanged handover information may comprise timing situation information of respective RBS, wherein the estimation of the timing related parameter relevant for the UE at RBS B is based on handover information received from RBS A. The RBS B may compare the timing information as received by means of the handover information received from RBS A to a reference time of the RBS B, and determine a difference between the handover information received from RBS A and the reference time of the RBS B.

For example, the UE has an ongoing communication session with the RBS A, wherein RBS A is serving the UE in both uplink and downlink. The UE is moving towards RBS B. At one point in time, the uplink radio link is handed over to the RBS B, while RBS A so to say "keeps" the downlink radio link. This means that the UE can be said to be served in downlink by RBS A and in uplink by RBS B. As long as the UE is served in both uplink and downlink by RBS A, the UE may receive time alignment configuration so that the UE will transmit any uplink transmission with reference to the time alignment configuration with respect to RBS A. Once the uplink is handed over to RBS B, the time alignment configuration may be invalid, e.g. due to the distance from the UE to RBS B being different than the distance from the UE to RBS A or due to the RBS A and RBS B having different respective reference times. Hence, the time alignment configuration must be updated with respect to RBS B.

Also in the "opposite direction", when the UE is being served by RBS B in both uplink and downlink and moves towards RBS A, there may be a point in time where the downlink radio link is handed over from RBS B to RBS A, wherein RBS B so to say "keeps" the uplink radio link. Then the RBS B is henceforth unable to send time alignment configuration to the UE since the UE is served by RBS A in downlink. The timing configuration is henceforth transmitted from RBS A. However, since the uplink is not handed over to RBS B, the time alignment configuration may still be up to date and no need to be updated until the UE has moved away from the geographical position where the handover of the downlink took place.

According to an embodiment, the method further comprises receiving a downlink signal transmission from the neighbouring RBS, wherein estimating 220 the timing related parameter(s) relevant for the UE is further based on the received downlink signal transmission.

In an example, the RBS B is equipped with receiving capabilities such that it can receive the downlink transmission from the neighbouring RBS A. Typically, the RBS is equipped with a UE component. This component may for example be used to scan the surroundings before the RBS B is active as an RBS to learn about neighbouring RBSs. In this context, the UE component of RBS B may be used to determine the timing situation in the vicinity of the RBS B, and this information can be used to predict what the timing situation will be for served UEs, if it can be assumed that they are close to the RBS B.

Estimating 220, 225 the timing related parameter(s) relevant for the UE may be performed regularly, in response to a request from the neighbouring RBS A, during or following a handover of the uplink transmission of the UE from the neighbouring RBS A to the RBS B.

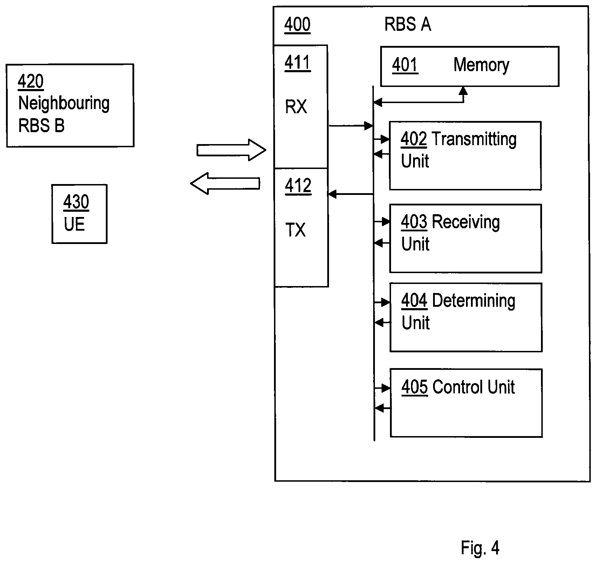

Embodiments herein also relate to an RBS operable in a cellular communication network, adapted for transmitting time alignment configuration to a UE. Exemplifying embodiment will now be described with reference to figure 4. The RBS has the same technical features, objects and advantages as the method performed by the RBS as described above. The RBS will only be described in brief in order to avoid unnecessary repetition.

Figure 4 illustrates the RBS 400, RBS A, operable in a cellular communication network, adapted for transmitting time alignment configuration to a UE 430 comprising a receiving unit 403 adapted for receiving, from a neighbouring RBS, RBS B, a timing related parameter relevant for the UE as estimated by the neighbouring RBS; and a determining unit 404 adapted for determining a time alignment configuration based on the received timing related parameter(s). The RBS A 400 further comprises a transmitting unit 402 adapted for transmitting, to the UE, the determined time alignment configuration.

The RBS 400 has the same advantages as the method 200 performed by the RBS 400. The RBS provides an alternative mechanism for acquisition and configuration of the proper uplink transmission timing to be used by the UE. It enables a UE to be "served" by two different RBSs and still use a proper uplink transmission timing. The method may be also beneficial during uplink configurations, especially when shifting uplink reception points between different nodes, e.g. a handover of the uplink radio link from RBS A to RBS B. In such an uplink handover situation, the method in particular provides the advantage that the UE may keep the previous source of the downlink transmissions, i.e. RBS A, and still use the downlink transmissions as the reference for the uplink transmission timing, despite the fact that the sender of the downlink transmissions (RBS A) and the receiver of the uplink transmissions (RBS B) are different nodes. Another advantage is that it is possible to complete handover from RBS A to RBS B (or from a first RBS to a second RBS) without a random access procedure towards the second RBS, i.e. RBS B, which does not serve the UE in downlink. The handover may further be performed without data transmission interruption. Still further, it is also possible to shift uplink timing relevance from the first RBS to the second RBS and back again without using random access to the RBS to which the uplink is handed over, making the procedure efficient to use where the first RBS is coordinating both the first and the second RBS resources. Still further, it is also possible to support multiple timing advance values at the UE that is associated with different nodes/points/RBSs, which makes it easier to realise handover diversity such as sending measurement reports to multiple nodes.

According to an embodiment, the determined time alignment configuration comprises an indication to the UE 430 that the time alignment configuration is based on the received timing related parameter(s) with respect to a transmitted pilot or reference signal from the neighbouring RBS.

According to still an embodiment, the transmitting unit 402 further is adapted for transmitting a pilot signal, reference signal or downlink transmission to the UE, wherein the determining unit (404) is adapted to determine the time alignment configuration based on the received timing related parameter(s) with respect to the transmitted pilot signal, reference signal or downlink transmission, wherein the determined time alignment configuration comprises an indication to the UE that the time alignment configuration is based on the received timing related parameter(s) with respect to the transmitted pilot, reference signal from the RBS or downlink transmission.

According to yet an embodiment, the transmitting unit (402) further is adapted for transmitting, to the neighbouring RBS, signalling indicating which of a Demodulation Reference Symbol, DM-RS, a Sounding Reference Symbol, SRS, and a Random Access, RA, preamble to use for estimating the timing related parameter(s) relevant for the UE.

According to an embodiment, the receiving unit further is adapted to receive the timing related parameter(s) relevant for the UE from the neighbouring RBS by means of an X2 interface.

According to still an embodiment, the receiving unit further is adapted to receive the timing related parameter(s) relevant for the UE, via an S1 interface, from a core network to which the RBS and the neighbouring RBS are associated.

According to still an embodiment, transmitting unit 402 is adapted for transmitting, to the UE, the determined time alignment configuration by means of an RRC protocol.

According to another embodiment, transmitting unit (402) is adapted for transmitting, to the UE, the determined time alignment configuration is performed by means of a MAC protocol.

According to yet an embodiment, the time alignment configuration comprises a new timing advance in absolute terms.

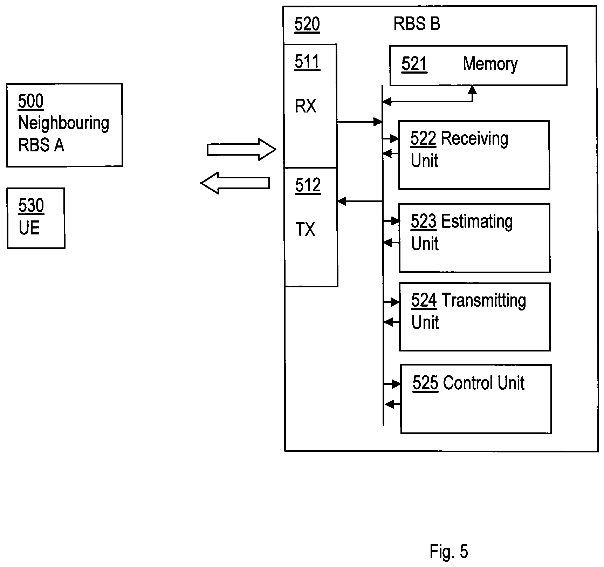

Embodiments herein also relate to an RBS operable in a cellular communication network, adapted for providing a timing related parameter relevant for a UE to a neighbouring RBS. Exemplifying embodiment will now be described with reference to figure 5. The RBS has the same technical features, objects and advantages as the method performed by the RBS as described above. The RBS will only be described in brief in order to avoid unnecessary repetition.

Figure 5 illustrates the RBS 500, RBS A, operable in a cellular communication network, adapted for providing a timing related parameter relevant for a UE to a neighbouring RBS comprising a receiving unit 522 adapted for receiving, from the UE, an uplink transmission, and an estimating unit 523 adapted for estimating a timing related parameter relevant for the UE based on the received uplink transmission. The RBS 500 further comprises a transmitting unit 524 adapted for transmitting, to a neighbouring RBS, the estimated timing related parameter relevant for the UE for enabling the neighbouring RBS to determine a timing alignment configuration based on the estimated timing related parameter.

The RBS 500 has the same advantages as the method 300 performed by the RBS 500. The RBS provides an alternative mechanism for acquisition and configuration of the proper uplink transmission timing to be used by the UE. It enables a UE to be "served" by two different RBSs and still use a proper uplink transmission timing. The method may be also beneficial during uplink configurations, especially when shifting uplink reception points between different nodes, e.g. a handover of the uplink radio link from RBS A to RBS B. In such an uplink handover situation, the method in particular provides the advantage that the UE may keep the previous source of the downlink transmissions, i.e. RBS A, and still use the downlink transmissions as the reference for the uplink transmission timing, despite the fact that the sender of the downlink transmissions (RBS A) and the receiver of the uplink transmissions (RBS B) are different nodes. Another advantage is that it is possible to complete handover from RBS A to RBS B (or from a first RBS to a second RBS) without a random access procedure towards the second RBS, i.e. RBS B, which does not serve the UE in downlink. The handover may further be performed without data transmission interruption. Still further, it is also possible to shift uplink timing relevance from the first RBS to the second RBS and back again without using random access to the RBS to which the uplink is handed over, making the procedure efficient to use where the first RBS is coordinating both the first and the second RBS resources. Still further, it is also possible to support multiple timing advance values at the UE that is associated with different nodes/points/RBSs, which makes it easier to realise handover diversity such as sending measurement reports to multiple nodes.

According to an embodiment, the estimating unit 523 further is adapted to estimate the timing related parameter by estimating the timing related parameter relevant for the UE 530 based on the received uplink transmission in relation to a transmitted pilot signal or reference signal from the RBS B to the UE.

According to still an embodiment, the received uplink transmission from the UE comprises at least one of a DM-RS, an SRS, and an RA preamble.

According to yet an embodiment, the receiving unit 522 further is adapted for receiving, from the neighbouring RBS, signalling indicating which of the DM-RS, SRS and the RA preamble to use for estimating the timing related parameter(s) relevant for the UE.

According to another embodiment, the estimating unit 532 is adapted for estimating the timing related parameter(s) relevant for the UE based on the received uplink transmission by comparing the uplink reception time of the received uplink transmission to a reference uplink reception time.

According to still an embodiment, the estimating unit 532 is adapted for estimating the timing related parameter(s) relevant for the UE per UE or for aggregated UEs which receive their time alignment configuration from the neighbouring RBS.

According to yet an embodiment, the reception of the uplink transmission from the UE is preceded by a handover of uplink transmission from the UE, from the neighbouring RBS to the RBS, wherein a downlink transmission to the UE is continued to be handled by the neighbouring RBS.

According to an embodiment, the receiving unit 522 further is adapted for receiving a downlink signal transmission from the neighbouring RBS, wherein the estimating unit 532 is adapted for estimating the timing related parameter(s) relevant for the UE also based on the received downlink signal transmission.

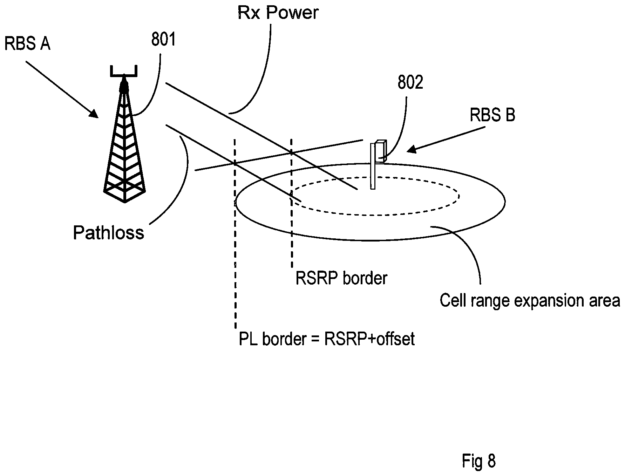

As described above, the respective methods and RBSs may be applied to heterogeneous networks comprising both macro RBSs having relatively strong output power and corresponding large coverage areas or cells and low power RBSs having relatively weak output power and corresponding small coverage areas or cells, wherein the RBS A is a macro RBS and the RBS B is a low power RBS. A schematic illustration of a macro RBS and a low power RBS is shown in figure 8. Figure 8 illustrates one macro RBS A 801 and one low power RBS B 802. Figure 8 also illustrates a feature in heterogeneous networks called cell expansion, wherein the coverage area, or cell, of the low power RBS B 802 is expanded. For UEs being located in an expansion area, it might be preferable to be served in downlink by the macro RBS A 801 than by the low power RBS B 802 since the output power of the low power RBS B 802 is relatively small compared to the output power of the macro RBS A 801. However, since a UE possible still being relatively close to the low power RBS B 802, it might be preferable to be served in uplink by the low power RBS B 802.

When the RBS B has a limited coverage area, or cell, which may be the case e.g. in a heterogeneous network if the RBS B is a low power RBS; then the same uplink timing can be used by all UEs in the second cell coverage area. Therefore, the uplink timing can be estimated over time since it can be considered static. The determination that the second cell have sufficient limited coverage may be automatic, or via configuration in OaM. An automatic function may disclose that the coverage is sufficiently limited by observing the timing advance procedure of its served UEs. If the observed timing advance is the same (or at least a pre-determined fraction of the observations are the same), then the cell coverage is considered sufficiently limited. The same timing advance may be 0 for all, or the pre-determined fraction, or the UEs served by the second cell.

In an example, the RBS B uses a determined sufficient limited coverage as the uplink timing situation. In addition, the determined same observed timing advance may be included in the uplink timing situation.

Alternatively, the RBS B estimates the uplink timing situation based on a reception timing of DL transmissions from the first cell. The reception timing may be estimated regularly or only once, for example when the RBS B was installed. Furthermore, if the RBSs have a common time reference, or if the time misalignment between the RBSs is known or estimated by one of the RBSs or a third node, then the estimated reception time can be related to the RBS A downlink time reference, for example the start of a downlink radio frame.

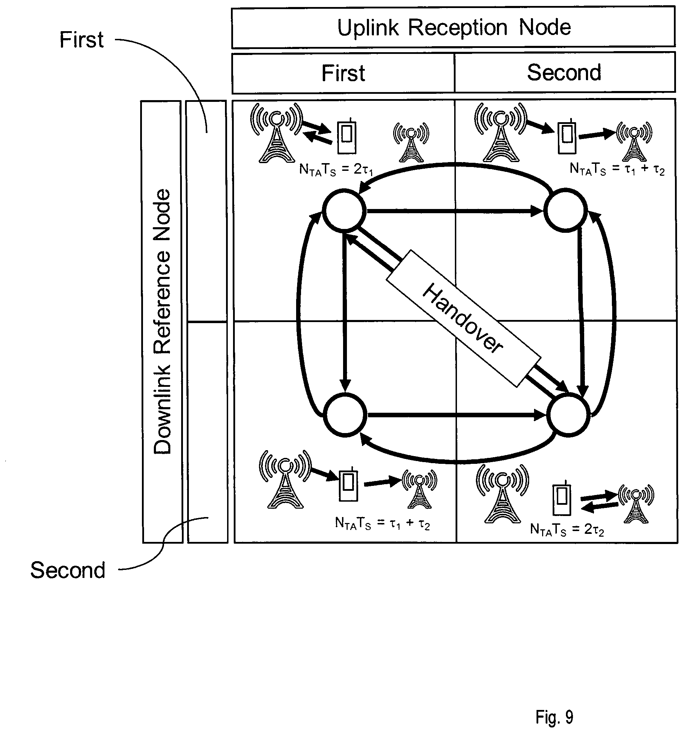

In still an example, the RBS A may reconfigure the UE to apply the timing advance in relation to the RBS A DL reception time or the RBS B DL reception time. The RBS A may also transfer its serving role towards the UE from the RBS A to the RBS B and back. Then some different transfers of downlink reference and uplink reception points are illustrated in figure 9. All these transfers will result in a need for an abrupt change of the uplink timing alignment. One alternative is to rely on incremental changes, so that the uplink timing alignment gradually will adapt to the needs after the transition. However, more accurate uplink timing alignment control can be obtained if the UE can be informed directly about the new downlink reference and uplink reception situation. Assume that the time of flight from UE to RBS A is $\tau_1$ and to RBS B is $\tau_2$. Then, Figure 9 indicates the needed uplink timing advance after the transition in each of the combinations of downlink reference and uplink reception point. Note that the transition from RBS A being both downlink reference and uplink reception point, to RBS B being both downlink reference and uplink reception point corresponds to a traditional handover between two different base stations.

As stated above, the methods and the RBSs described above may be employed in different types of communication networks. Most wireless communication systems benefit to some extent from time alignment across radio links. Examples of possible benefits are a more time aligned processing of signals, and better suppression of interference from other radio links. Essentially, these benefits can be observed in any radio access technology, such as LTE Frequency Division Duplex, FDD, and LTE Time Division Duplex, TDD, other RATs of the 3rd Generation Partnership Project, 3GPP, family, e.g. UMTS/High Speed Packet Access, HSPA, and/or GSM/ General Packet Radio Services, GPRS/ Enhanced Data Rate for Global Evolution, EDGE, and non-3GPP RATs, e.g. IEEE 802.11x family (where "x" may be e.g. "a", "b", "g" or "n") RATs or 3GPP2 RATs, e.g. Code Division Multiple Access, CDMA, 2000. In the context of this description, all RBSs are assumed to employ the same RAT, e.g. a future release of 3GPP LTE, e.g. release 12 (or later).

When a radio link is moved from one RBS to another, the time alignment needs to be adjusted to match the alignment situation of the new RBS. Benefits with procedures that considers timing reassignments therefore depends on the number of expected handovers of radio links. In a heterogeneous network, large and small cells, high power and low power RBSs/access points are mixed with each other in a largely overlapping fashion. Consequently, a higher number of handover may take place compared to a homogeneous network. However, the RBSs and respective methods are generally applicable to any radio network deployment.

Other concepts that may be utilized to create the heterogeneous environment include e.g. Remote Radio Units, RRUs, and so-called "baseband hotels", where multiple baseband processing units are located at a semi-central site. In a heterogeneous network the same location is often covered (i.e. within the radio transmission and reception coverage area) by more than one cell and RBS or access point. Low power RBSs are often deployed to provide greater capacity in hotspot areas with dense user population and intense wireless communication, while macro RBSs provide the overall wide area coverage. In this way a layered cell architecture is provided, e.g. consisting of a macro cell layer (or macro layer) and a low power cell layer (or low power layer). Pico and femto RBSs, both being examples of different low power RBSs, as well as RRUs may also be deployed to improve coverage in locations which are poorly covered by the macro cell layer, e.g. indoors.

When RBSs have different transmission power (including pilot power), but about the same uplink radio conditions, there are areas in the service area, where the RBS, or cell, with the higher pilot and transmission power is more attractive to use for downlink communication than the RBS, or cell, with lower power, while the RBS with lower power is more attractive than the RBS with higher power for uplink communication. This is often referred to as UL/DL imbalance. Radio link performance-wise it would therefore be attractive to use the higher power RBS for downlink, and the lower power RBS for uplink communications in such areas, which may be realized by employing the RBSs and the respective methods described above. It may even be so that the lower power RBS discontinues its downlink transmission if there are only UEs in such areas.

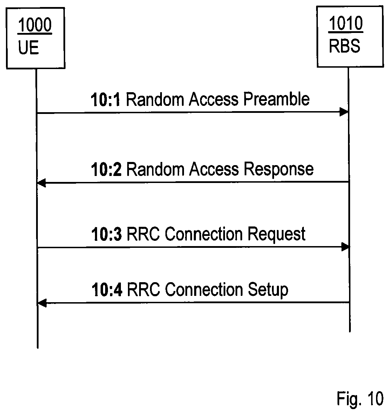

Above, Random Access, RA, is briefly described. Below, the basic RA procedure in LTE will be described in more detail. The RA procedure in LTE is a four-phase procedure as illustrated in figure 10.

Phase 1 consists of transmission 10:1 of a random access preamble, allowing the RBS 910 to estimate the transmission timing of the UE 900. Uplink synchronization is necessary as the UE 900 otherwise cannot transmit any uplink data.

Phase 2 consists of the network transmitting 10:2 a timing advance command to correct the uplink timing, based on the timing of arrival measurement in the first step. In addition to establishing uplink synchronization, the second step also assigns uplink resources and temporary identifier to the UE 900 to be used in the third step in the random access procedure.

Phase 3 consists of signalling 10:3 from the UE 900 to the network using the uplink shared channel, UL-SCH, similar to normal scheduled data. A primary function of this message is to uniquely identify the UE 900. The exact content of this signalling depends on the state of the UE 900, e.g., whether it is previously known to the network or not.

Phase 4, the final phase 10:4, is responsible for contention resolution in case multiple UEs 900 tried to access the system on the same resource.

For cases where the network knows, in advance, that a particular UE will perform a Random Access Procedure to acquire uplink synchronization, a contention-free variety of the Random Access Procedure has been agreed. This effectively makes it possible to skip the Contention Resolution process of Phases 3 and 4 for important cases such as arrival to target RBS at handover, HO, and arrival of downlink data. When the random access procedure is completed, the UE is time aligned to its serving RBS with a timing advance relative its reception timing of the serving RBS downlink.

In figure 4, the RBS A 400 is also illustrated comprising a receiving unit 411 and a transmitting unit 412. Through these two units, the RBS A 400 is adapted to communicate with other nodes and/or entities in the wireless communication network. The receiving unit 411 may comprise more than one receiving arrangement. For example, the receiving unit may be connected to both a wire and an antenna, by means of which the RBS A 400 is enabled to communicate with other nodes and/or entities in the wireless communication network. Similarly, the transmitting unit 412 may comprise more than one transmitting arrangement, which in turn are connected to both a wire and an antenna, by means of which the RBS A 400 is enabled to communicate with other nodes and/or entities in the wireless communication network. The RBS A 400 further comprises a memory 401 for storing data. Further, the RBS A 400 is illustrated comprising a control or processing unit 405 which in turns is connected to the different units 402-404. It shall be pointed out that this is merely an illustrative example and the RBS A 400 may comprise more, less or other units or modules which execute the functions of the RBS A 400 in the same manner as the units illustrated in figure 4.

It should be noted that figure 4 merely illustrates various functional units in the RBS A 400 in a logical sense. The functions in practice may be implemented using any suitable software and hardware means/circuits etc. Thus, the embodiments are generally not limited to the shown structures of the RBS A 400 and the functional units. Hence, the previously described exemplary embodiments may be realised in many ways. For example, one embodiment includes a computer-readable medium having instructions stored thereon that are executable by the control or processing unit 405 for executing the method steps in the RBS A 400. The instructions executable by the computing system and stored on the computer-readable medium perform the method steps of the RBS A 400 as set forth in the claims.

In figure 5, the RBS B 500 is also illustrated comprising a receiving unit 511 and a transmitting unit 512. Through these two units, the RBS B 500 is adapted to communicate with other nodes and/or entities in the wireless communication network. The receiving unit 511 may comprise more than one receiving arrangement. For example, the receiving unit may be connected to both a wire and an antenna, by means of which the RBS B 500 is enabled to communicate with other nodes and/or entities in the wireless communication network. Similarly, the transmitting unit 512 may comprise more than one transmitting arrangement, which in turn are connected to both a wire and an antenna, by means of which the RBS B 500 is enabled to communicate with other nodes and/or entities in the wireless communication network. The RBS B 500 further comprises a memory 521 for storing data. Further, the RBS B 500 is illustrated comprising a control or processing unit 525 which in turns is connected to the different units 522-524. It shall be pointed out that this is merely an illustrative example and the RBS B 500 may comprise more, less or other units or modules which execute the functions of the RBS B 500 in the same manner as the units illustrated in figure 5.

It should be noted that figure 4 merely illustrates various functional units in the RBS B 500 in a logical sense. The functions in practice may be implemented using any suitable software and hardware means/circuits etc. Thus, the embodiments are generally not limited to the shown structures of the RBS B 500 and the functional units. Hence, the previously described exemplary embodiments may be realised in many ways. For example, one embodiment includes a computer-readable medium having instructions stored thereon that are executable by the control or processing unit 525 for executing the method steps in the RBS B 500. The instructions executable by the computing system and stored on the computer-readable medium perform the method steps of the RBS B 500 as set forth in the claims.

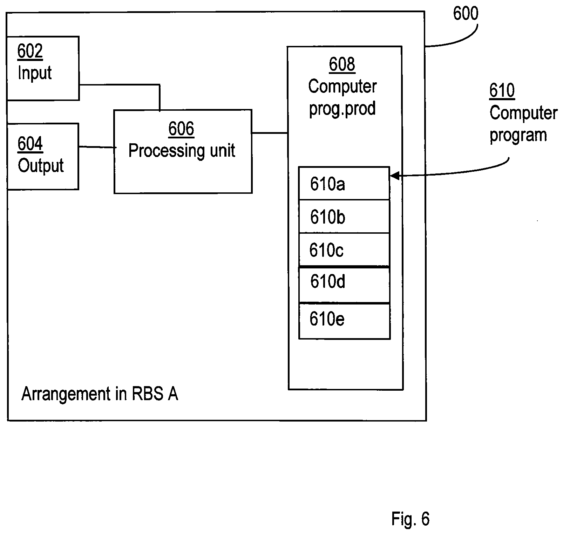

Figure 6 schematically shows an embodiment of an arrangement in an RBS A 600. Comprised in the arrangement in the RBS A 600 are here a processing unit 606, e.g. with a DSP (Digital Signal Processor). The processing unit 606 may be a single unit or a plurality of units to perform different actions of procedures described herein. The arrangement in the RBS A 600 may also comprise an input unit 602 for receiving signals from other entities, and an output unit 604 for providing signal(s) to other entities. The input unit and the output unit may be arranged as an integrated entity or as illustrated in the example of figure 4, as one or more interfaces 411/412.

Furthermore, the arrangement in the RBS A 600 comprises at least one computer program product 608 in the form of a non-volatile memory, e.g. an EEPROM (Electrically Erasable Programmable Read-Only Memory), a flash memory and a hard drive. The computer program product 608 comprises a computer program 610, which comprises code means, which when executed in the processing unit 606 in the arrangement in the RBS A 600 causes the arrangement in the RBS A 600 to perform the actions e.g. of the procedure described earlier in conjunction with figure 2a.

The computer program 610 may be configured as a computer program code structured in computer program modules 610a-610e. Hence, in an exemplifying embodiment, the code means in the computer program of the arrangement in the RBS A 600 comprises a receiving unit, or module, for receiving, from a neighbouring RBS, a timing related parameter relevant for the UE as estimated by the neighbouring RBS. The computer program further comprises a determining unit, or module, for determining a time alignment configuration based on the received timing related parameter(s). The computer program further comprises a transmitting unit, or module, for transmitting, to the UE, the determined time alignment configuration.

The computer program modules could essentially perform the actions of the flow illustrated in figure 2a, to emulate the arrangement in an RBS A 600. In other words, when the different computer program modules are executed in the processing unit 606, they may correspond to the units 402-404 of figure 4.

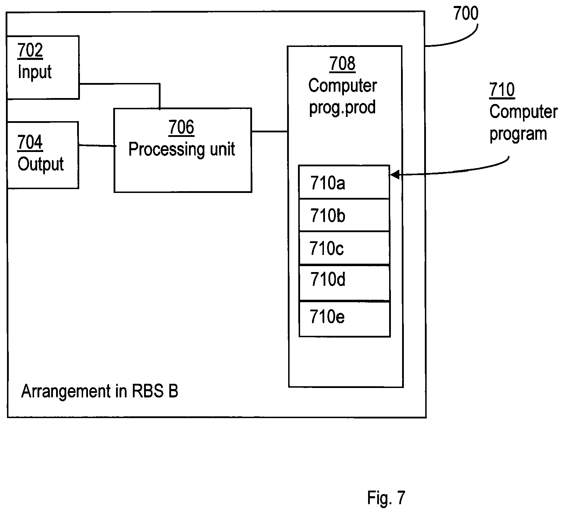

Figure 7 schematically shows an embodiment of an arrangement in an RBS B 700. Comprised in the arrangement in the RBS B 700 are here a processing unit 706, e.g. with a DSP (Digital Signal Processor). The processing unit 706 may be a single unit or a plurality of units to perform different actions of procedures described herein. The arrangement in the RBS B 700 may also comprise an input unit 702 for receiving signals from other entities, and an output unit 704 for providing signal(s) to other entities. The input unit and the output unit may be arranged as an integrated entity or as illustrated in the example of figure 5, as one or more interfaces 511/512.

Furthermore, the arrangement in the RBS B 700 comprises at least one computer program product 708 in the form of a non-volatile memory, e.g. an EEPROM (Electrically Erasable Programmable Read-Only Memory), a flash memory and a hard drive. The computer program product 708 comprises a computer program 710, which comprises code means, which when executed in the processing unit 706 in the arrangement in the RBS B 700 causes the arrangement in the RBS B 700 to perform the actions e.g. of the procedure described earlier in conjunction with figure 3a.

The computer program 710 may be configured as a computer program code structured in computer program modules 710a-710e. Hence, in an exemplifying embodiment, the code means in the computer program of the arrangement in the RBS B 700 comprises a receiving unit, or module, for receiving, from a UE, an uplink transmission. The computer program further comprises an estimating unit, or module, for estimating a timing related parameter relevant for the UE based on the received uplink transmission. The computer program further comprises a transmitting unit, or module, for transmitting, to a neighbouring RBS, the estimated timing related parameter relevant for the UE for enabling the neighbouring RBS to determine a timing alignment configuration based on the estimated timing related parameter.

The computer program modules could essentially perform the actions of the flow illustrated in figure 3a, to emulate the arrangement in the RBS B 700. In other words, when the different computer program modules are executed in the processing unit 706, they may correspond to the units 522-524 of figure 5.

Although the code means in the respective embodiments disclosed above in conjunction with figures 2a and 3a are implemented as computer program modules which when executed in the respective processing unit causes the RBS A and the RBS B respectively to perform the actions described above in the conjunction with figures mentioned above, at least one of the code means may in alternative embodiments be implemented at least partly as hardware circuits.

The processor may be a single CPU (Central processing unit), but could also comprise two or more processing units. For example, the processor may include general purpose microprocessors; instruction set processors and/or related chips sets and/or special purpose microprocessors such as ASICs (Application Specific Integrated Circuit). The processor may also comprise board memory for caching purposes. The computer program may be carried by a computer program product connected to the processor. The computer program product may comprise a computer readable medium on which the computer program is stored. For example, the computer program product may be a flash memory, a RAM (Random-access memory) ROM (Read-Only Memory) or an EEPROM, and the computer program modules described above could in alternative embodiments be distributed on different computer program products in the form of memories within the RBS A and the RBS B respectively.

It is to be understood that the choice of interacting units, as well as the naming of the units within this disclosure are only for exemplifying purpose, and nodes suitable to execute any of the methods described above may be configured in a plurality of alternative ways in order to be able to execute the suggested procedure actions.

It should also be noted that the units described in this disclosure are to be regarded as logical entities and not with necessity as separate physical entities.

**Claims**

1. A method (200) performed by a Radio Base Station, RBS, operable in a cellular communication network, for transmitting time alignment configuration to a UE, the method comprising:

   - receiving (220), from a neighbouring RBS, a timing related parameter relevant for the UE as estimated by the neighbouring RBS,
   - determining (230) a time alignment configuration based on the received timing related parameter and
   - transmitting (240), to the UE, the determined time alignment configuration,

wherein the determined time alignment configuration comprises an indication to the UE that the time alignment configuration is based on the received timing related parameter with respect to a transmitted pilot or reference signal from the neighbouring RBS.

2. A method (200) according to claim 1, further comprising transmitting (210) a pilot signal, reference signal or downlink transmission to the UE, wherein the time alignment configuration is based on the received timing related parameter with respect to the transmitted pilot signal, reference signal or downlink transmission, wherein the determined time alignment configuration comprises an indication to the UE that the time alignment configuration is based on the received timing related parameter with respect to the transmitted pilot, reference signal from the RBS or downlink transmission.

3. A method (200) according to any of claims 1-2, further comprising transmitting (215), to the neighbouring RBS, signalling indicating which of a Demodulation Reference Symbol, DM-RS, a Sounding Reference Symbol, SRS, and a Random Access, RA, preamble to use for estimating the timing related parameter(s) relevant for the UE.

4. A method (300) according to any preceding claim, the method further comprising said neighbouring base station:

    - receiving (310), from the UE, an uplink transmission,
    - estimating (320) said timing related parameter relevant for the UE based on the received uplink transmission, and
    - transmitting (330), to said RBS, the estimated timing related parameter relevant for the UE for enabling said RBS to determine said time alignment configuration.

5. A method (300) according to claim 4, wherein estimating (220) said timing related parameter further comprises estimating the timing related parameter relevant for the UE based on the received uplink transmission in relation to a transmitted pilot signal or reference signal from the RBS to the UE.

6. A method (300) according to claim 4 or 5, wherein the uplink transmission from the UE received by the neighbouring base station comprises at least one of a DeModulation Reference Signal, DM-RS, Sounding Reference Signal, SRS, and a Random Access, RA, preamble.

7. A method (300) according to claim 6, further comprising the neighbouring base station receiving, from said RBS, signalling indicating which of the DM-RS, SRS and the RA preamble to use for estimating the timing related parameter relevant for the UE.

8. A method (300) according to any of claims 5-7, wherein estimating (220) the timing related parameter relevant for the UE based on the received uplink transmission comprises comparing the uplink reception time of the received uplink transmission to a reference uplink reception time.

9. A Radio Base Station, RBS, (400) operable in a cellular communication network, adapted for transmitting time alignment configuration to a User Equipment, UE, (430) the RBS comprising:

    - a receiving unit (403) adapted for receiving, from a neighbouring RBS, a timing related parameter relevant for the UE as estimated by the neighbouring RBS,
    - a determining unit (404) adapted for determining a time alignment configuration based on the received timing related parameter and
    - a transmitting unit (402) adapted for transmitting, to the UE, the determined time alignment configuration,

    wherein the determined time alignment configuration comprises an indication to the UE that the time alignment configuration is based on the received timing related parameter with respect to a transmitted pilot or reference signal from the neighbouring RBS.

10. A Radio Base Station, RBS, (400) according to claim 9 in combination with a further Radio Base Station, RBS, (500), said further RBS (500) being the neighbouring RBS referred to in claim 9, the further RBS (500) comprising:

    - a receiving unit (522) adapted for receiving, from the UE, an uplink transmission,
    - an estimating unit (523) adapted for estimating a timing related parameter relevant for the UE based on the received uplink transmission, and
    - a transmitting unit (524) adapted for transmitting, to said RBS (400) the estimated timing related parameter relevant for the UE for enabling the RBS (400) to determine the time alignment configuration.

11. An RBS (400) and further RBS (500) according claim 10, wherein the estimating unit (523) of the further RBS (500) is adapted to estimate the timing related parameter by estimating the timing related parameter relevant for the UE based on the received uplink transmission in relation to a transmitted pilot signal or reference signal from the further RBS (500) to the UE.

**12.** An RBS (400) and further RBS (500) according to claim 10 or 11, wherein the uplink transmission from the UE received by the further RBS (500) comprises at least one of a DeModulation Reference Signal, DM-RS, Sounding Reference Signal, SRS, and a Random Access, RA, preamble.

**13.** An RBS (400) and further RBS (500) according to claim 12, wherein the receiving unit (522) of the further RBS (500) is adapted for receiving, from the RBS (400), signalling indicating which of the DM-RS, SRS and the RA preamble to use for estimating the timing related parameter relevant for the UE.

**14.** An RBS (400) and further RBS (500) according to any of claims 10-13, wherein the estimating unit (532) of the further RBS (500) is adapted for estimating the timing related parameter relevant for the UE based on the received uplink transmission by comparing the uplink reception time of the received uplink transmission to a reference uplink reception time.

**Patentansprüche**

**1.** Verfahren (200), das von einer Funkbasisstation, RBS, durchgeführt wird, die in einem zellularen Kommunikationsnetzwerk betrieben werden kann, zum Senden einer Zeitanpassungskonfiguration an eine UE, wobei das Verfahren umfasst:

- Empfangen (220) eines zeitbezogenen Parameters, der für die UE relevant ist, wie durch eine benachbarte RBS geschätzt, von der benachbarten RBS,
- Bestimmen (230) einer Zeitanpassungskonfiguration basierend auf dem empfangenen zeitbezogenen Parameter, und
- Senden (240) der bestimmten Zeitanpassungskonfiguration an die UE,

wobei die bestimmte Zeitanpassungskonfiguration eine Angabe für die UE umfasst, dass die Zeitanpassungskonfiguration auf dem empfangenen zeitbezogenen Parameter in Bezug auf ein gesendetes Pilot- oder Referenzsignal von der benachbarten RBS basiert.

**2.** Verfahren (200) nach Anspruch 1, ferner umfassend ein Senden (210) eines Pilotsignals, eines Referenzsignals oder einer Downlink-Übertragung an die UE, wobei die Zeitanpassungskonfiguration auf dem empfangenen zeitbezogenen Parameter in Bezug auf das gesendete Pilotsignal, das gesendete Referenzsignal oder die gesendete Downlink-Übertragung basiert, wobei die bestimmte Zeitanpassungskonfiguration eine Angabe für die UE umfasst, dass die Zeitanpassungskonfiguration auf dem empfangenen zeitbezogenen Parameter in Bezug auf das gesendete Pilot- oder Referenzsignal von der RBS oder die gesendete Downlink-Übertragung basiert.

**3.** Verfahren (200) nach einem der Ansprüche 1 bis 2, ferner umfassend ein Senden (215) von Signalisierung an die benachbarte RBS, die angibt, welches von einem Demodulationsreferenzsymbol, DM-RS, einem Sondierungsreferenzsymbol, SRS, und einer Direktzugriffs, RA,-Präambel zum Schätzen der/des für die UE relevanten zeitbezogenen Parameter(s) verwendet werden soll.

**4.** Verfahren (300) nach einem der vorhergehenden Ansprüche, wobei das Verfahren ferner umfasst, dass die benachbarte Basisstation:

- eine Uplink-Übertragung von der UE empfängt (310),
- den für die UE relevanten zeitbezogenen Parameter basierend auf der empfangenen Uplink-Übertragung schätzt (320), und
- den für die UE relevanten geschätzten zeitbezogenen Parameter an die RBS sendet (330), um die RBS zum Bestimmen der Zeitanpassungskonfiguration zu befähigen.

**5.** Verfahren (300) nach Anspruch 4, wobei das Schätzen (220) des zeitbezogenen Parameters ferner ein Schätzen des für die UE relevanten zeitbezogenen Parameters basierend auf der empfangenen Uplink-Übertragung in Bezug auf ein von der RBS an die UE gesendetes Pilotsignal oder Referenzsignal umfasst.

**6.** Verfahren (300) nach Anspruch 4 oder 5, wobei die Uplink-Übertragung von der UE, die durch die benachbarte Basisstation empfangen wird, ein Demodulationsreferenzsymbol, DM-RS, ein Sondierungsreferenzsymbol, SRS, und/oder eine Direktzugriffs, RA,-Präambel umfasst.

**7.** Verfahren (300) nach Anspruch 6, ferner umfassend, dass die benachbarte Basisstation Signalisierung von der RBS empfängt, die angibt, welches von dem DM-RS, dem SRS und der RA-Präambel zum Schätzen des für die UE relevanten zeitbezogenen Parameters verwendet werden soll.

**8.** Verfahren (300) nach einem der Ansprüche 5 bis 7, wobei das Schätzen (220) des für die UE relevanten zeitbezogenen Parameters basierend auf der empfangenen Uplink-Übertragung ein Vergleichen der Uplink-Empfangszeit der empfangenen Uplink-Übertragung mit einer Uplink-Referenzempfangszeit umfasst.

**9.** Funkbasisstation, RBS, (400), die in einem zellularen Kommunikationsnetzwerk betrieben werden kann und zum Senden von Zeitanpassungskonfiguration an eine Benutzereinrichtung, UE, (430) ausgelegt ist, wobei die RBS umfasst:

- eine Empfangseinheit (403), die zum Empfangen (403) eines für die UE relevanten zeitbezogenen Parameters, wie durch eine benachbarte RBS geschätzt, von der benachbarten RBS ausgelegt ist,
- eine Bestimmungseinheit (404), die zum Bestimmen einer Zeitanpassungskonfiguration basierend auf dem empfangenen zeitbezogenen Parameter ausgelegt ist, und
- eine Sendeeinheit (402), die zum Senden der bestimmten Zeitanpassungskonfiguration an die UE ausgelegt ist,

wobei die bestimmte Zeitanpassungskonfiguration eine Angabe für die UE umfasst, dass die Zeitanpassungskonfiguration auf dem empfangenen zeitbezogenen Parameter in Bezug auf ein gesendetes Pilot- oder Referenzsignal von der benachbarten RBS basiert.

**10.** Funkbasisstation, RBS, (400) nach Anspruch 9 in Kombination mit einer weiteren Funkbasisstation, RBS, (500), wobei die weitere RBS (500) die in Anspruch 9 erwähnte benachbarte RBS ist, wobei die weitere RBS (500) umfasst:

- eine Empfangseinheit (522), die zum Empfangen einer Uplink-Übertragung von der UE ausgelegt ist,
- eine Schätzeinheit (523), die zum Schätzen eines für die UE relevanten zeitbezogenen Parameters basierend auf der empfangenen Uplink-Übertragung ausgelegt ist, und
- eine Sendeeinheit (524), die so ausgelegt ist, dass sie den für die UE relevanten geschätzten zeitbezogenen Parameter an die RBS (400) sendet, um die RBS zum Bestimmen der Zeitanpassungskonfiguration zu befähigen.

**11.** RBS (400) und weitere RBS (500) nach Anspruch 10, wobei die Schätzeinheit (523) der weiteren RBS (500) zum Schätzen des zeitbezogenen Parameters durch Schätzen des für die UE relevanten zeitbezogenen Parameters basierend auf der empfangenen Uplink-Übertragung in Bezug auf ein von der weiteren RBS (500) an die UE gesendetes Pilotsignal oder Referenzsignal ausgelegt ist.

**12.** RBS (400) und weitere RBS (500) nach Anspruch 10 oder 11, wobei die Uplink-Übertragung von der UE, die durch die weitere RBS (500) empfangen wird, ein Demodulationsreferenzsymbol, DM-RS, ein Sondierungsreferenzsymbol, SRS, und/oder eine Direktzugriffs, RA,-Präambel umfasst.

**13.** RBS (400) und weitere RBS (500) nach Anspruch 12, wobei die Empfangseinheit (522) der weiteren RBS (500) zum Empfangen von Signalisierung von der RBS (400) ausgelegt ist, wobei die Signalisierung angibt, welches von dem DM-RS, dem SRS und der RA-Präambel zum Schätzen des für UE relevanten zeitbezogenen Parameters verwendet werden soll.

**14.** RBS (400) und weitere RBS (500) nach einem der Ansprüche 10 bis 13, wobei die Schätzeinheit (532) der weiteren RBS (500) zum Schätzen des für die UE relevanten zeitbezogenen Parameters basierend auf der empfangenen Uplink-Übertragung durch Vergleichen der Uplink-Empfangszeit der empfangenen Uplink-Übertragung mit einer Uplink-Referenzempfangszeit ausgelegt ist.

**Revendications**

**1.** Procédé (200) exécuté par une station de base radio, RBS, opérationnelle dans un réseau de communication cellulaire, pour transmettre une configuration d'alignement temporel à un UE, le procédé comprenant de :

- recevoir (220), depuis une RBS voisine, un paramètre relatif à la temporisation significatif pour l'UE tel qu'estimé par la RBS voisine,
- déterminer (230) une configuration d'alignement temporel sur la base du paramètre reçu relatif à la temporisation et
- transmettre (240), à l'UE, la configuration d'alignement temporel déterminée, dans lequel la configuration d'alignement temporel déterminée comprend une indication à l'UE que la configuration d'alignement temporel est basée sur le paramètre reçu relatif à la temporisation par rapport à un signal pilote ou de référence transmis à partir de la RBS voisine.

**2.** Procédé (200) selon la revendication 1, comprenant en outre de transmettre (210) un signal pilote, un signal de référence ou une transmission en liaison descendante à l'UE, dans lequel la configuration d'alignement temporel est basée sur le paramètre reçu relatif à la temporisation par rapport au signal pilote, au signal de référence ou à la transmission en liaison descendante, dans lequel la configuration d'alignement temporel déterminée comprend une indication à l'UE que la configuration d'alignement temporel est basée sur le paramètre reçu relatif à la temporisation par rapport au signal pilote transmis, au signal de référence transmis à partir de la RBS ou la transmission en liaison descendante.

3. Procédé (200) selon une quelconque des revendications 1-2, comprenant en outre de transmettre (215), à la RBS voisine, une signalisation indiquant lequel d'un préambule de symbole de référence de démodulation, DM-RS, de symbole de référence de sondage, SRS, et d'accès aléatoire, RA, utilisé pour l'estimation du ou des paramètre(s) relatif (s) à la temporisation significatifs pour l'UE.

4. Procédé (300) selon une quelconque des revendications précédentes, le procédé comprenant en outre ladite station de base voisine :

    - recevoir (310), à partir de l'UE, une transmission en liaison montante,
    - estimer (320) ledit paramètre relatif à la temporisation significatif pour l'UE sur la base de la transmission en liaison montante reçue, et
    - transmettre (330), à ladite RBS, le paramètre relatif à la temporisation estimée significatif pour l'UE afin de permettre à ladite RBS de déterminer ladite configuration d'alignement temporel.

5. Procédé (300) selon la revendication 4, dans lequel l'estimation (220) dudit paramètre relatif à la temporisation comprend en outre d'estimer le paramètre relatif à la temporisation significatif pour l'UE sur la base de la transmission en liaison montante reçue en relation avec un signal pilote ou un signal de référence transmis à partir de la RBS vers l'UE.

6. Procédé (300) selon la revendication 4 ou 5, dans lequel la transmission en liaison montante à partir de l'UE reçu par la station de base voisine comprend au moins un d'un préambule de symbole de référence de démodulation, DM-RS, de symbole de référence de sondage, SRS, et d'accès aléatoire, RA.

7. Procédé (300) selon la revendication 6, comprenant en outre la réception par la station de base voisine, à partir de ladite RBS, d'une signalisation indiquant lequel du préambule DM-RS, SRS et RA utiliser pour estimer le paramètre relatif à la temporisation significatif pour l'UE.

8. Procédé (300) selon une quelconque des revendications 5-7, dans lequel l'estimation (220) du paramètre relatif à la temporisation significatif pour l'UE sur la base de la transmission en liaison montante reçue comprend de comparer le temps de réception en liaison montante de la transmission en liaison montante reçu avec un temps de réception en liaison montante de référence.

9. Station de base radio, RBS (400), opérationnelle dans un réseau de communication cellulaire, adaptée pour transmettre une configuration d'alignement temporel à un équipement d'utilisateur UE (430), la RBS comprenant :

    - une unité de réception (403) adaptée pour recevoir, depuis une RBS voisine, un paramètre relatif à la temporisation significatif pour l'UE tel qu'estimé par la RBS voisine,
    - une unité de détermination (404) adaptée pour déterminer une configuration d'alignement temporel sur la base du paramètre reçu relatif à la temporisation et
    - une unité de transmission (402) adaptée pour transmettre, à l'UE, la configuration d'alignement temporel déterminée,

dans lequel la configuration d'alignement temporel déterminé comprend une indication à l'UE que la configuration d'alignement temporel est basée sur le paramètre reçu relatif à la temporisation par rapport à un signal pilote ou de référence transmis à partir de la RBS voisine.

10. Station de base radio, RBS (400), selon la revendication 9 en combinaison avec une station de base radio supplémentaire RBS (500), ladite RBS supplémentaire (500) étant la RBS voisine désignée à la revendication 9, la RBS supplémentaire (500) comprenant :

    - une unité de réception (522) adaptée pour recevoir, depuis l'UE, une transmission en liaison montante,
    - une unité d'estimation (523) adaptée pour estimer un paramètre relatif à la temporisation significatif pour l'UE sur la base de la transmission en liaison montante reçue, et
    - une unité de transmission (524) adaptée pour transmettre à ladite RBS (400) le paramètre relatif à la temporisation estimée significatif pour l'UE afin de permettre à la RBS (400) de déterminer la configuration d'alignement temporel.

11. RBS (400) et RBS supplémentaire (500) selon la revendication 10, dans laquelle l'unité d'estimation (523) de la RBS supplémentaire (500) est adaptée pour estimer le paramètre relatif à la temporisation en estimant le paramètre relatif à la temporisation significative pour l'UE sur la base de la transmission en liaison montante reçue en relation avec un signal pilote ou un signal de référence transmis à partir de la RBS supplémentaire (500) à l'UE.

12. RBS (400) et RBS supplémentaire (500) selon la revendication 10 ou 11, dans laquelle la transmission en liaison montante à partir de l'UE reçu par la RBS supplémentaire (500) comprend au moins un d'un préambule de signal de référence de démodulation, DM-RS, de signal de référence de sondage, SRS, et d'accès aléatoire, RA.

**13.** RBS (400) et RBS supplémentaire (500) selon la revendication 12, dans laquelle l'unité de réception (522) de la RBS supplémentaire (500) est adaptée pour recevoir, à partir de la RBS (400), une signalisation indiquant lequel du préambule DM-RS, SRS et RA utiliser pour estimer le paramètre relatif à la temporisation significatif pour l'UE.

**14.** RBS (400) et RBS supplémentaire (500) selon une quelconque des revendications 10-13, dans laquelle l'unité d'estimation (532) de la RBS supplémentaire (500) est adapté pour estimer le paramètre relatif à la temporisation significatif pour l'UE sur la base de la transmission en liaison montante reçu en comparant le temps de réception en liaison montante de la transmission en liaison montante reçu avec un temps de réception en liaison montante de référence.

Time when RBS sends DL frame

Time when UE receives DL frame

Time when RBS should receive UL frame

Time when UE ha to send UL frame

$$N_{TA}T_s$$

time

Fig. 1a

160

150

$$N_{TA}T_s$$

Uplink too early – negative Δt

160

150

$$N_{TA}T_s$$

Uplink too late – positive Δt

Fig. 1b

200 ⟋ ⟋220

Receiving timing related parameter relevant to UE

230

Determining time alignment configuration based on timing related parameter relevant to UE

240

Transmitting time alignment configuration to UE

Fig. 2a

210

Transmitting pilot or reference signal to UE

215

Transmitting uplink signal configuration to neighbouring RBS

220

Receiving timing related parameter relevant to UE

230

Determining time alignment configuration based on timing related parameter relevant to UE

240

Transmitting time alignment configuration to UE

Fig. 2b

**2:1** Uplink signal configuration

**2:2** Uplink signal configuration

**2:3** Uplink signal transmission

**2:4** Uplink timing estimation

**2:5** Estimated timing related parameter

Fig. 2c

Fig. 2d

270
MSC

A

271
BSC

A_bis          A_bis

272-1          272-2          } GERAN

Fig. 2e

280
SGSN

IuPS

281
RNC

Iub          Iub

282-1          282-2          } UTRAN

Fig. 2f

265
NM

264-1
DM/OSS  ——Itf-P2P——  264-1
DM/OSS

261-1
NE/RBS  ——X2——  261-1
NE/RBS

Fig. 2g

300 ⟶

310
Receiving uplink transmission from UE

320
Estimating timing related parameter relevant for the UE based on received uplink transmission

330
Transmitting timing related parameter to neighbouring RBS

Fig. 3a

300 →

┌─────────────────────────────────────────────────────────────┐ ⌐305
┆ Receiving uplink signal configuration from neighbouring RBS A ┆
└─────────────────────────────────────────────────────────────┘

⌐310
┌─────────────────────────────────────┐
│ Receiving uplink transmission from UE │
└─────────────────────────────────────┘

⌐320
┌─────────────────────────────────────┐
│ Estimating timing related parameter  │
│ relevant for the UE based on received │
│ uplink transmission                  │
└─────────────────────────────────────┘

⌐330
┌─────────────────────────────────────┐
│ Transmitting timing related parameter to │
│ neighbouring RBS                     │
└─────────────────────────────────────┘

Fig. 3b

Fig. 4

Fig. 5

Fig. 6

**702** Input

**704** Output

**706** Processing unit

**708** Computer prog.prod

710a
710b
710c
710d
710e

**700**

**710** Computer program

Arrangement in RBS B

Fig. 7

Fig 8

Fig. 9

EP 2 957 060 B1

31

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011100673 A1
- US 2011080896 A1